# EUROPÄISCHE PATENTSCHRIFT

(11) **EP 2 733 717 B1**
(45) Veröffentlichungstag und Bekanntmachung des Hinweises auf die Patenterteilung: **27.04.2016**
(21) Anmeldenummer: 13004897.8
(22) Anmeldetag: 11.10.2013
(51) Int. Cl.: H01H 31/12, H01H 85/54, H02B 1/056

(54) **Sicherungstrennschalter mit wenigstens drei Anschlussschienen**
Isolating switch with at least three connecting rails
Sectionneur de sécurité doté d'au moins trois rails de raccordement

(30) Priorität: 14.11.2012 PL 40160712
(43) Veröffentlichungstag der Anmeldung: 21.05.2014
(73) Patentinhaber: APATOR S.A., 87-100 Torun (PL)
(72) Erfinder: Szarzynski, Krysztof, 88-320 Strzelno (PL); Luczak, Robert, 87-800 Wloclawek (PL); Geberle, Damian, 87-100 Torun (PL); Baran, Marcin, 95-080 Tuszyn (PL); Latka, Tomasz, 87-220 Radzyn Chelminksy (PL)
(74) Vertreter: Bischof, Oliver

(56) Entgegenhaltungen:
- DE-A1- 4 308 691
- DE-U1- 20 021 418
- DE-U1- 29 612 416
- FR-A1- 2 655 183

## Beschreibung

Die Erfindung betrifft einen Sicherungstrennschalter mit einem Basisteil, in das wenigstens drei Anschlussschienen mit Kontaktelementen eingebaut sind.

Aus PL 200045 B1 bzw. EP 1 251 537 B1 ist ein Sicherungslasttrenschalter in Leistenform bekannt, der U- bzw. L-förmige, zum Hintergreifen einer Sammelschiene dienende Kontakthaken sowie Anschlussarme aufweist, wobei einer von ihnen einen zum Unterteil des Sicherungslasttrennschalters senkrechten Anschlussarm und zwei flache Kontaktschenkel hat, die mit dem Anschlussarm verbunden sind und parallel zum Unterteil des Trennschalters verlaufen.

Aus DE 200 21 418 U1 ist ein weiterer Leistungshalter bekannt, der ein Basisteil, in das drei Anschlussschienen eingebaut sind, umfasst, wobei die Anschlussschienen jeweils ein Kontaktelement und ein Klemmteil aufweisen, wobei die Klemmteile mit ihren freien Enden jeweils in Richtung eines Anschlussteils des Basisteils zeigen. Es sind Trennschalter bekannt, bei welchen die Anschlussschiene aus Blech gefertigt und zusätzlich verbunden werden, um die Möglichkeit eines Anschlusses an eine Schienenbrücke unter Verwendung von Hakenklemmen zu bekommen.

Es stellt sich die Aufgabe, Sicherungstrennschalter der vorgenannten Art insbesondere in Bezug auf ihre Herstellungskosten ohne Verlust an Sicherheit und Arbeitsweise zu verbessern.

Diese Aufgabe wird gelöst durch einen Sicherungstrennschalter, umfassend ein Basisteil, in das wenigstens drei Anschlussschienen eingebaut sind, wobei die Anschlussschienen jeweils ein Kontaktelement und ein Klemmteil aufweisen, wobei die Klemmteile mit ihren freien Enden jeweils in Richtung eines Anschlussteils des Basisteils zeigen, wobei die Anschlussschiene ein eine Öffnung aufweisendes Befestigungsteil hat, die Öffnung zusammen mit einer in einer Kappe befindlichen Öffnung das Drehen mit einem Inbusschlüssel erlaubt und ein Ende einer Andrückschraube zugänglich macht, wobei die Kappe in eine im Basisteil befindliche Anschlusskammer platzierbar ist.

Insbesondere wird damit das Aufschieben des Schienenmoduls auf das Klemmteil der ersten Anschlussschiene, das Klemmteil der zweiten Anschlussschiene und auf das Klemmteil der dritten Anschlussschiene ermöglicht.

Ein Vorteil der Erfindung besteht darin, dass die Anschlussschiene aus einem Stück Flachleiste gefertigt sind, was die Herstellungskosten der Anschlussschiene verringert und den Anschluss eines Trennschalters an eine Schienenbrücke unter Verwendung eines Schienenmoduls mit Schienenklemmen ermöglicht. Die entsprechende Form der Anschlussschiene ermöglicht die Herstellung eines Trennschalters mit nach unten oder nach oben gerichteten Stromabflüssen.

Der Gegenstand der Erfindung ist anhand der beiliegenden Zeichnung näher erläutert, deren Figuren zeigen:
- Fig. 1: - einen Sicherungstrennschalter in einer Parkpo sition, im Schnitt;
- Fig. 2: - ein Detail A des Trennschalters gemäß Fig. 1;
- Fig. 3: - einen kompletten Deckel in einer perspektivi schen Ansicht;
- Fig. 4: - das Auslöselement in einer anderen perspektivi schen Seitenansicht;
- Fig. 5: - ebenfalls das Auslöselement in einer anderen Seitenansicht;
- Fig. 6: - ein Kopfteil in einer perspektivischen Ansicht von vorne;
- Fig. 7: - das Kopfteil in einer perspektivischen Ansicht von vorne;
- Fig. 8: - ein Detail B des Kopfteils gemäß Fig. 7;
- Fig. 9: - ein Gehäuse in einer perspektivischen Ansicht;
- Fig. 10: - ein Detail C des Gehäuses gemäß Fig. 9;
- Fig. 11: - ein Detail D des Gehäuses gemäß Fig. 9;
- Fig. 12: - einen Handgriff in einer perspektivischen An sicht;

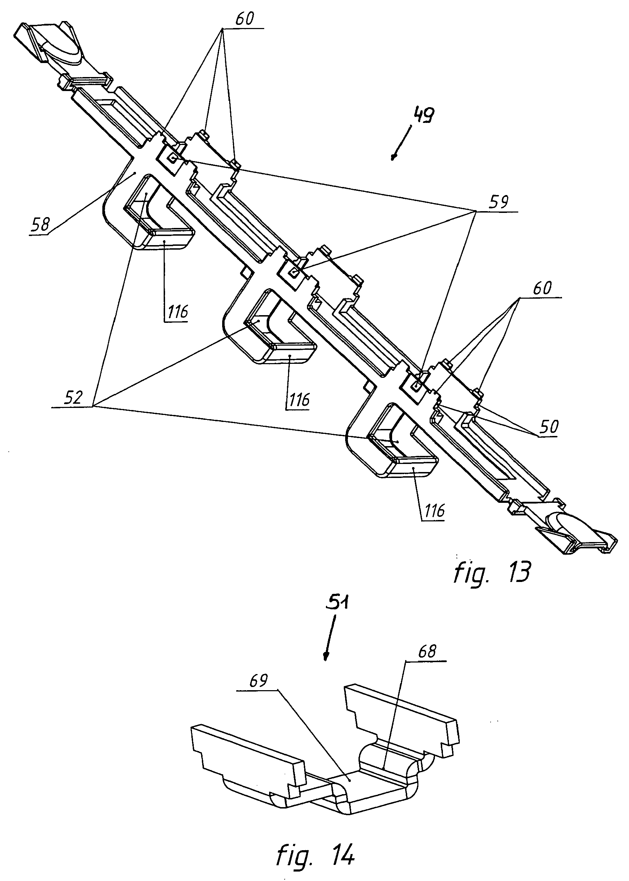

- Fig. 13: - eine Schienenklemmen-Abschirmung in einer per spektivischen Ansicht;
- Fig. 14: - eine Klemmunterlage in einer perspektivischen Ansicht,
- Fig. 15: - die Klemmunterlage in einer perspektivischen Ansicht von unten;
- Fig. 16: - eine erste Anschlussschiene in einer perspekti vischen Ansicht;
- Fig. 17: - eine zweite Anschlussschiene in einer perspek tivischen Ansicht;
- Fig. 18: - eine dritte Anschlussschiene in einer perspek tivischen Ansicht;

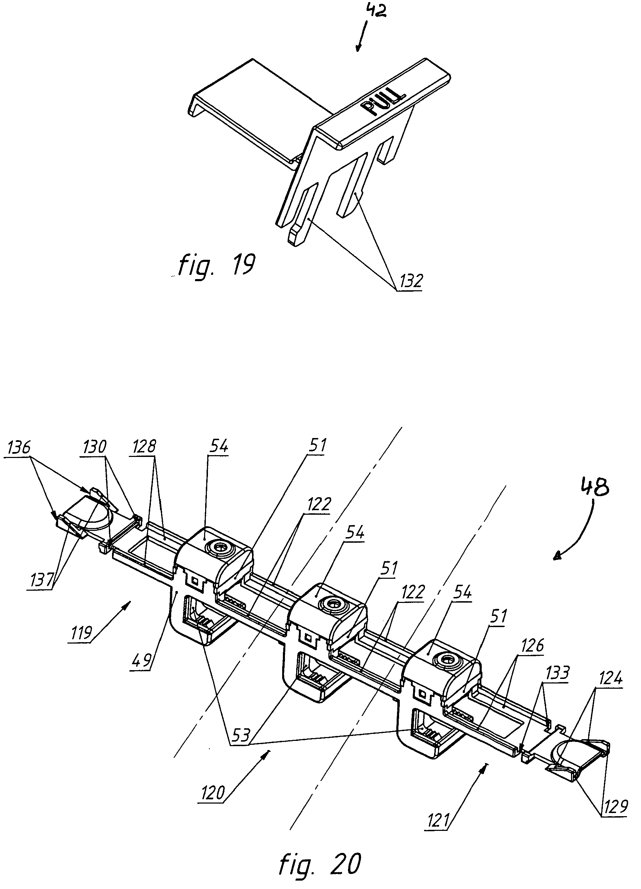

- Fig. 19: - ein Blockier-Maskierelement in einer perspekti vischen Ansicht;
- Fig. 20: - ein Schienenmodul in einer perspektivischen An sicht;

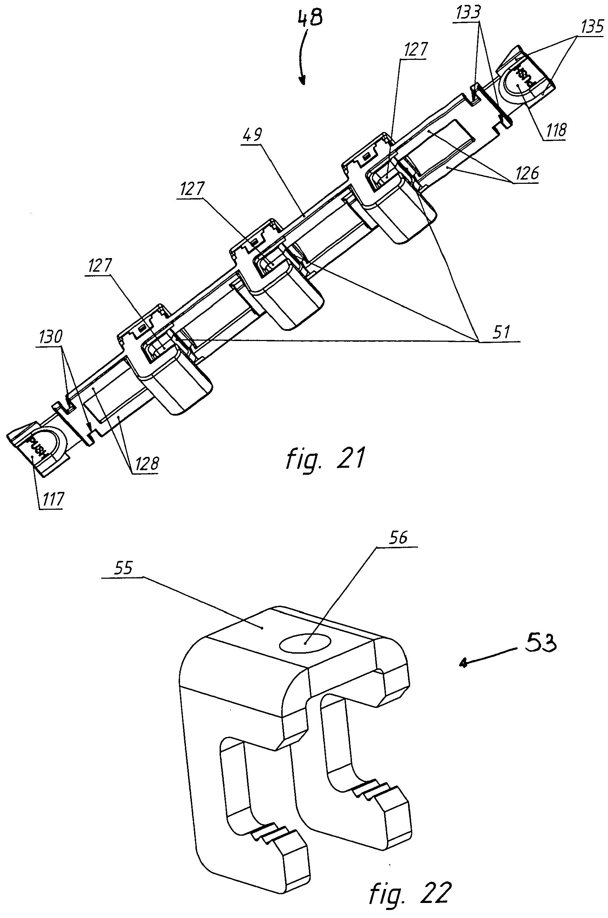

- Fig. 21: - der Schienenmodul in einer perspektivischen An sicht von unten;
- Fig. 22: - eine Schienenklemme in einer perspektivischen Ansicht;
- Fig. 23: - den Trennschalter mit einem herausgenommenen kompletten Deckel, in einer rechtwinkligen Pa rallelprojektion, im Schnitt;
- Fig. 24: - ein Unterteil in einer perspektivischen An sicht;
- Fig. 25: - ebenfalls das Unterteil in einer perspektivi schen Ansicht;

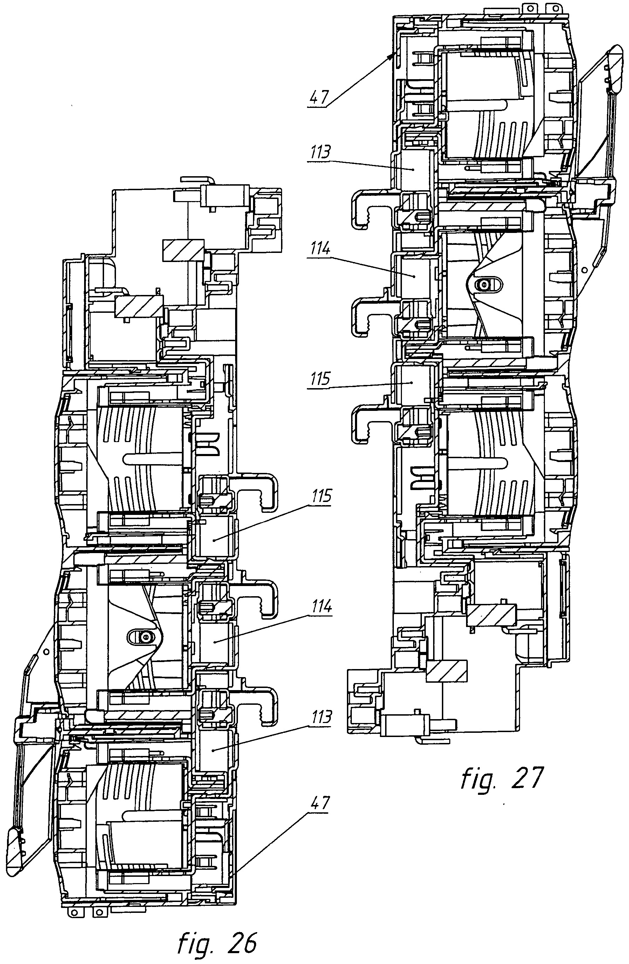

- Fig. 26: - den Trennschalter in einer rechtwinkligen Pa rallelprojektion, im Schnitt;
- Fig. 27: - den Trennschalter in einer rechtwinkligen Pa rallelprojektion, im Schnitt;

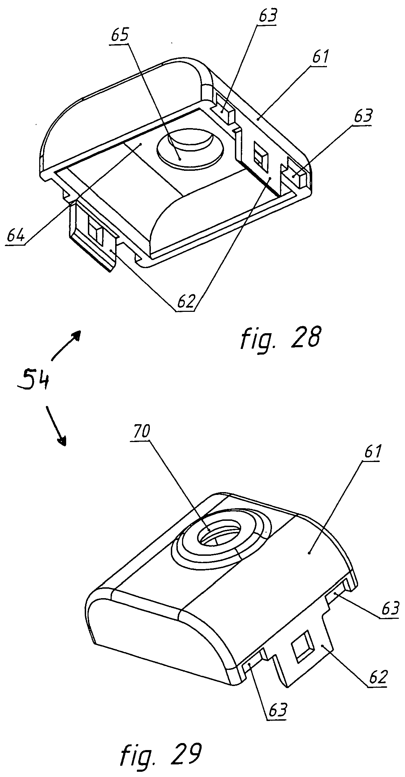

- Fig. 28: - eine Kappe in einer perspektivischen Ansicht von unten;
- Fig. 29: - die Kappe in einer perspektivischen Draufsicht.

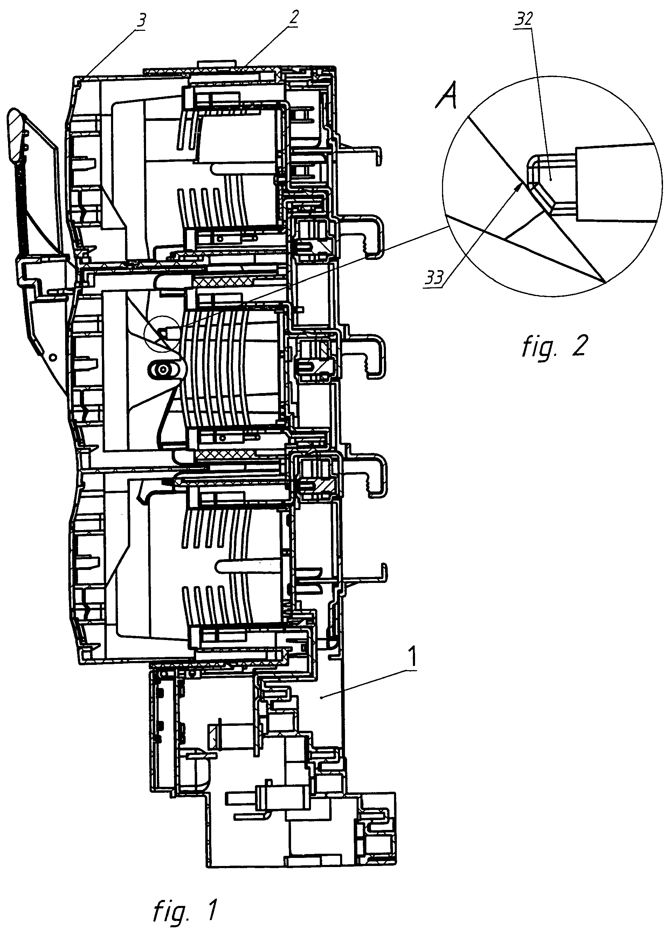

Ein Sicherungstrennschalter gemäß Fig. 1 beinhaltet ein komplettes Unterteil 1 mit einem daran aufgesetzten Gehäuse 2 und einem kompletten Deckel 3.

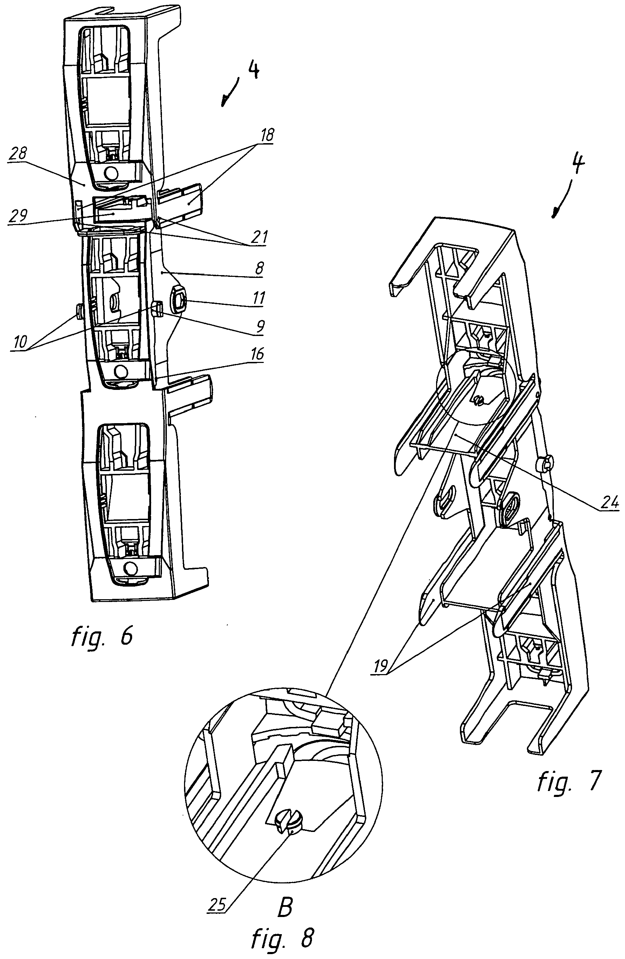

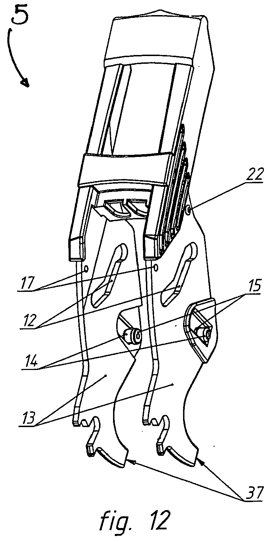

Der komplette Deckel 3 umfasst ein Kopfteil 4, einen Handgriff 5, ein Auslöselement 6 und drei Scheiben 7. Das Kopfteil 4 weist - im mittleren Teil seiner ersten Seitenteile 8 - erste Stifte 9 mit ersten Kragen 10 sowie ovale Öffnungen 11 auf. Die ersten Stifte 9 sind zu Ausschnitten 12, die sich in zweiten Seitenteilen 13 des Handgriffs 5 befinden, kompatibel (vergl. Figuren 6 und 12). An den Innenseiten der zweiten Seitenteile 13 des Handgriffs 5 befinden sich zweite Stifte 14 mit zweiten Kragen 15, die an die ovalen, in den Seitenteilen 8 des Kopfteils 4 angeordneten Öffnungen 11 angepasst sind.

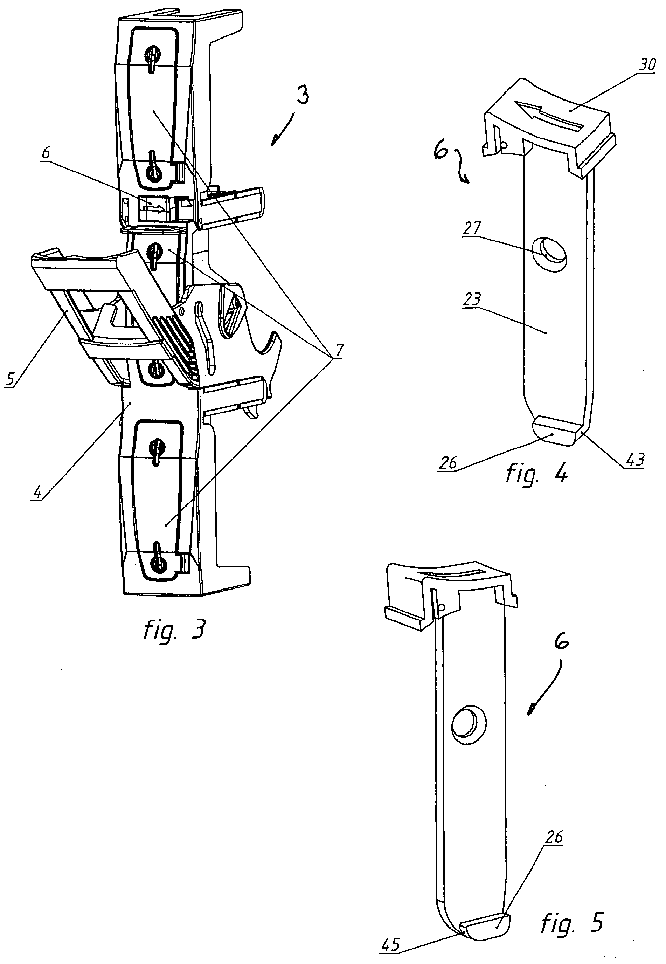

An den ersten Seitenteilen 8 des Kopfteils 4 sind erste Positionierungselemente 16 angeordnet, die in einer offenen Position des Trennschalters in erste Öffnungen 17 im zweiten Seitenteil 13 des Handgriffs 5 eingreifen und den Handgriff 5 in einer offenen Position halten. (Verg. Figuren 3 und 6).

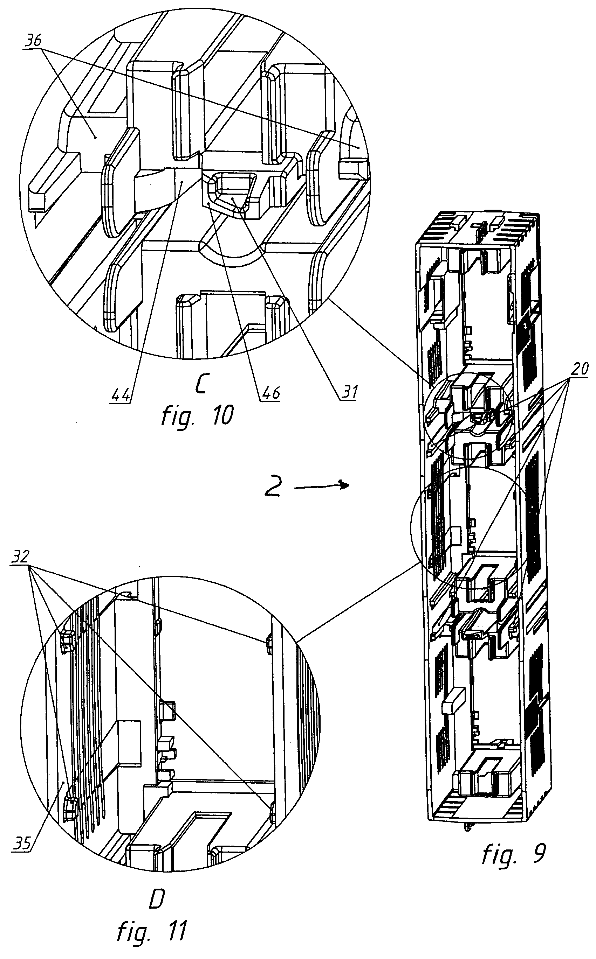

Das Kopfteil 4 umfasst erste Steckleisten 18 und zweite Steckleisten 19, die verschiebbar an die ersten, im Gehäuse 2 angeordneten Führungen 20 angepasst sind. Die ersten Steckleisten 18 weisen zweite Öffnungen 21 auf, die in einer geschlossenen Position oder Parkposition des Trennschalters sich mit den zweiten, an den zweiten Seitenteilen 13 des Handgriffs 5 angeordneten Positionierungselementen 22 verzahnen und dadurch den Handgriff 5 in einer geschlossenen Position halten.
(Vergl. Figuren 9 und 12)

Das Auslöselement 6 weist an seinem dritten Seitenteil 23 eine dritte Öffnung 27 auf, in der ein dritter Stift 25 angeordnet ist, der sich an einer Trennwand 24 am Deckel 4 befindet. Dank dieser Verbindung ist es möglich, das Auslöselement 6 gegenüber dem Kopfteil 4 zu schwenken.(vergl. Fig. 4)

Das Kopfteil 4 umfasst erste Steckleisten 18 und zweite Steckleisten 19, die verschiebbar an die ersten, im Gehäuse 2 angeordneten Führungen 20 angepasst sind. Die ersten Steckleisten 18 weisen zweite Öffnungen 21 auf, die in einer geschlossenen Position oder Parkposition des Trennschalters sich mit den zweiten, an den zweiten Seitenteilen 13 des Handgriffs 5 angeordneten Positionierungselementen 22 verzahnen und dadurch den Handgriff 5 in einer geschlossenen Position halten.
(Vergl. Figuren 9 und 12)

Das Auslöselement 6 weist an seinem dritten Seitenteil 23 eine dritte Öffnung 27 auf, in der ein dritter Stift 25 angeordnet ist, der sich an einer Trennwand 24 am Deckel 4 befindet. Dank dieser Verbindung ist es möglich, das Auslöselement 6 gegenüber dem Kopfteill 4 zu schwenken.(vergl. Fig. 4)

Das Kopfteil 4 weist in seinem Stirnteil 28 eine erste rechteckige Öffnung 29 auf, in der ein Griffteil 30 des Auslöselements 6 sich längs eines Bogens verlagert.

Das dritte Seitenteil 23 des Auslöselements 6 beinhaltet einen fünften Anschlag 26, der nach dem Öffnen oder "Einparken" des Kopfteils gegen einen sechsten Anschlag 31 im Gehäuse 2 stößt, was das Herausnehmen des kompletten Deckels 3 aus dem Gehäuse 2 unmöglich macht. Um den kompletten Deckel 3 aus dem Gehäuse 2 herauszunehmen, sollte man das Griffteil 30 des Auslöseelements 6 maximal nach rechts verschieben. In dieser Position kommt es zur Verschiebung des fünften Anschlags 26 des Auslöseelements 6 hinter den sechsten Anschlag 31 im Gehäuse 2. Beim erneuten Einlegen des kompletten Deckels 3 in das Gehäuse 2 zum Zwecke des Einparkens des Apparats kann sich das Griffteil 30 des Auslöseelements 6 in einer beliebigen Position befinden; der Handgriff 5 sollte jedoch dieselbe Position haben wie beim geschlossenen Trennschalter. Wenn das Griffteil 30 des Löselements 6 die rechte Endstellung eingenommen hat, dann verschiebt sich die an dem fünften Anschlag 26 des Auslöseelements 6 angeordnete, erste Gleitfläche 43 auf einer ersten Leitfläche 44 im Gehäuse 2, was eine Schwenkung des Auslöseelements 6 sowie eine Verschiebung des fünften Anschlags 26 in eine Position bewirkt, die das Herausnehmen des kompletten Deckels 3 aus dem Gehäuse 2 unmöglich macht.

Wenn aber das Griffteil 30 des Auslöseelements 6 sich nicht in der rechten Endstellung, sondern in einer anderen Position befindet, dann verschiebt sich eine zweite, am fünften Anschlag 26 des Auslöselements 6 angeordnete Gleitfläche 45 auf einer zweiten Leitfläche 46 im Gehäuse 2, worauf sich die erste, am fünften Anschlag 26 des Auslöselements 6 angeordnete Gleitfläche 43 auf der ersten Leitfläche 44 im Gehäuse 2 verschiebt, was wiederum eine Schwenkung des Ausöselements 6 sowie eine Verschiebung des fünften Anschlags 26 in eine Position bewirkt, die das Herausnehmen des kompletten Deckels 3 aus dem Gehäuse 2 unmöglich macht.

An Innenwänden 35 im Gehäuse 2 sind siebte Anschläge 32 angeordnet, gegen die in einer Parkposition des Trennschalters erste Stützflächen 33 stoßen, die am Handgriff 5 angeordnet sind. Das Gehäuse 2 beinhaltet vierte Stifte 36, die in einer Parkposition des Trennschalters sich an den ersten, am Handgriff 5 angeordneten Stützflächen 33 abstützen. Während des Verbindens kommt es zum Zusammenwirken der vierten Stifte 36 mit den in den zweiten Seitenteilen 13 des Handgriffs 5 angeordneten Ausschnitten 12, die einen Eingriffspunkt für sie bilden. Dadurch, dass sich die ersten Stützflächen 33 an den siebten Anschlägen 32 und an den oberen Teilen der vierten Stifte 36 abstützen, befindet sich der komplette Deckel 3 in einer Parkposition des Trennschalters in einer stabilen Lage; es gibt keine Möglichkeit, den Deckel 3 ins Innere des Gehäuses einzudrücken. Dabei macht der fünfte Anschlag 26, der gegen den sechsten Anschlag 31 im Gehäuse 2 stößt, das Herausnehmen des Deckels 3 unmöglich. 8
(Vergl. insbesondere Figuren 9 - 11)

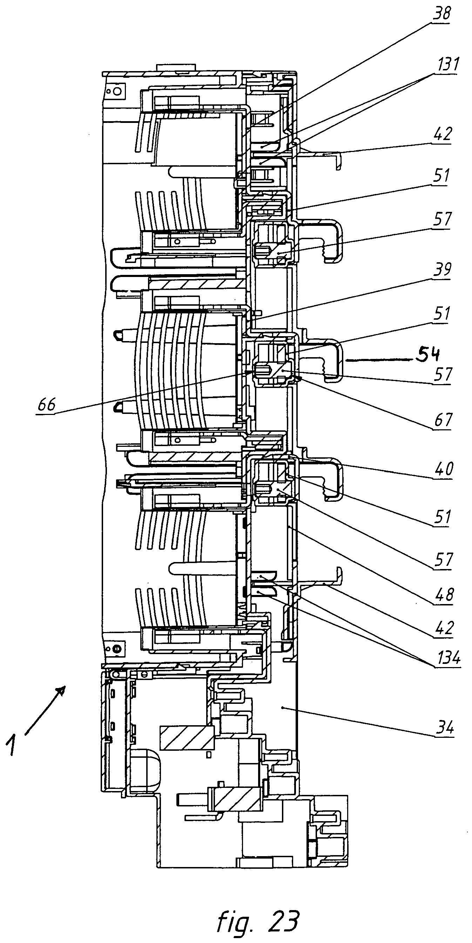

Das komplette Unterteil 1 gemäß den Figuren 1 und 23 besteht aus einem Basisteil 34, in dem drei Abflussschienen 37 und eine erste Anschlussschiene 38, eine zweite Anschlussschiene 39, eine dritte Anschlussschiene 40 und zwei Blockier-Maskierelemente 42 angeordnet sind, sowie aus einem Maskierelement 47.

Das komplette Unterteil 1 beinhaltet darüber hinaus ein Schienenmodul 48. Der Schienenmodul 48 besteht aus einer Abschirmung der Schienenklemmen 49, die wiederum aus einem zweiten Oberteil 119, einem zweiten Mittelteil 120 und einem zweiten Unterteil 121 besteht. Die Abschirmung der Schienenklemmen 49 weist Aussparungen 50 auf, in denen Klemmunterlagen 51 eingesetzt sind. Die Abschirmung der Schienenklemmen 49 weist auch Sicherungssitze 52 auf, an denen Schienenklemmen 53 verschiebbar montiert sind. Das Herausfallen der Schienenklemmen 53 wird von eine Blockade bildenden Kappen 54 verhindert. Die Abschirmung der Schienenklemmen 49 hat auch Stirnwände 116. An den Stirnflächen 55 der Schienenklemmen 53 befinden sich vierte, mit Gewinde versehenen Öffnungen 56, in denen Andrückschrauben 57 eingedreht sind. Die Abschirmung der Schienenklemmen 49 an ersten Seitenflächen 58 weist erste Daumen 59 und Positionierungsstifte 60 auf. Die Kappen 54 weisen an ihren zweiten Seitenflächen 61 erste Schnappverschlüsse 62 auf. Auf beiden Seiten der ersten Schnappverschlüsse 62 sind Positionierungssitze 63 symmetrisch angeordnet. An den Innenflächen 64 befinden sich erste Zentriersitze 65. Während der Montage der Kappen 54 am Schienenmodul 48 werden die Positionierungsstifte 60 in die ersten Positionierungssitze 63 eingeschoben, wodurch die richtige Lage der Kappe 54 im Verhältnis zur Abschirmung der Schienenklemmen 49 gesichert wird, wobei die ersten Schnappverschlüsse 62 an den ersten Daumen 59 anhaken. Gleichzeitig werden erste Enden 66 der Andrückschrauben 57 in den Zentriersitzen 65 platziert, wobei die anderen Enden der Andrückschrauben 67 in zweite Positionierungssitze 68 der Klemmunterlagen 51 gelangen und sich an zweiten Stützflächen 69 im Inneren der zweiten Positionierungssitze 68 abstützen. In dem vollständig montierten Schienenmodul 48 hat jede der drei Andrückschrauben 57 lediglich die Möglichkeit, sich um die eigene Längs-Symmetrieachse zu drehen, während alle anderen Bewegungsmöglichkeiten blockiert sind. Die Zentriersitze 65 haben konzentrisch angeordnete, durchgehende fünfte Öffnungen 70.

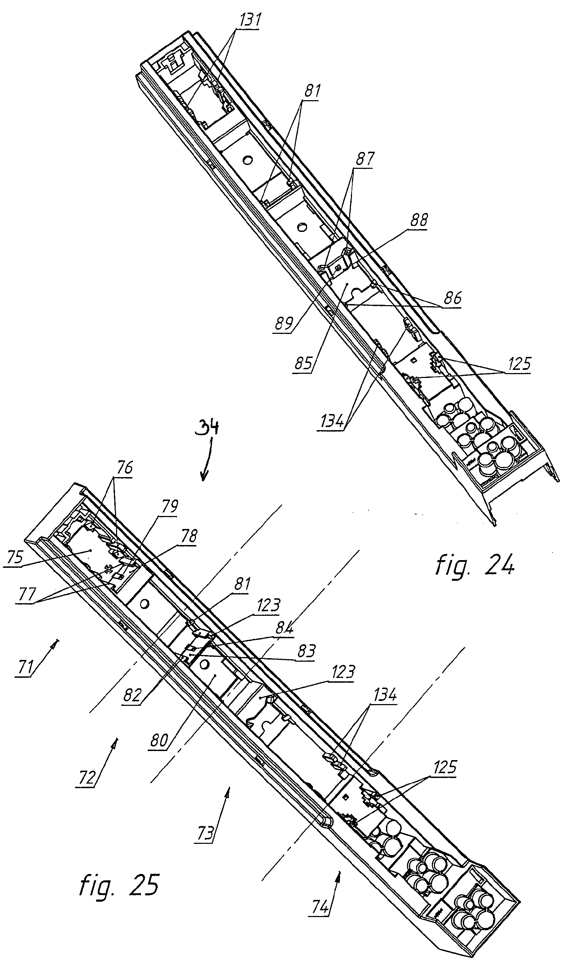

Das Basisteil 34 (vergl. Fig. 25) besteht aus einem Oberteil 71, einem Mittelteil 72, einem Unterteil 73 und einem Anschlussteil 74. Das Basisteil 34 weist in seinem Oberteil 71 einen ersten Befestigungssitz 75 auf, der aus zweiten Schnappverschlüssen 76, zweiten, an den Rändern einer ersten Sicherungsfläche 78 befindlichen Führungen 77 und zweiten, in der Mitte der ersten Sicherungsfläche 78 befindlichen Daumen 79 besteht. Das Mittelteil 72 des Basisteils 34 beinhaltet einen zweiten Befestigungssitz 80, der aus dritten Schnappverschlüssen 81, dritten, an den Rändern einer zweiten Sicherungsfläche 83 befindlichen Führungen 82 und dritten, in der Mitte der zweiten Sicherungsfläche 83 befindlichen Daumen 84 besteht. Das Unterteil 73 des Basisteils 34 enthält einen dritten Befestigungssitz 85, der aus vierten Schnappverschlüssen 86, vierten, an den Rändern einer dritten Sicherungsfläche 88 befindlichen Führungen 87 und eines vierten, in der Mitte der dritten Sicherungsfläche 88 befindlichen Daumens 89 besteht.

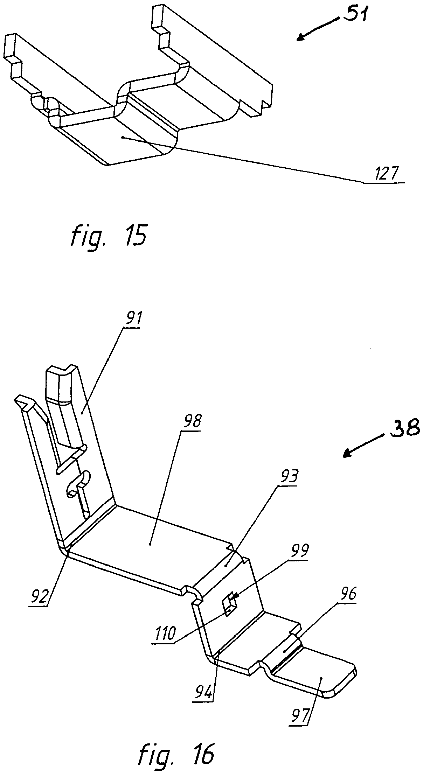

Die mit dem Basisteil 34 verbundene erste Anschlussschiene 38 (vergl. Fig. 16) ist aus einem Stück Flachleiste gefertigt. Am ersten Ende der ersten Anschlussschiene 38 ist ein Kontaktelement 91 ausgebildet, wonach eine erste Biegung 92 in einem Winkel von 90°, eine zweite Biegung 93 in einem Winkel von 90° (in einer Richtung, die der Richtung der ersten Biegung 92 entgegengesetzt ist) und eine dritte Biegung 94 in einem Winkel von 90° (in einer Richtung, die mit der Richtung der ersten Biegung 92 übereinstimmt) angeordnet ist. Am anderen Ende der ersten Anschlussschiene 38 befindet sich ein Rezess 96, der ein erstes Klemmteil 97 bildet. Zwischen der ersten Biegung 92 und der zweiten Biegung 93 beinhaltet die erste Anschlussschiene 38 ein erstes Befestigungsteil 98, während zwischen der zweiten Biegung 93 und der dritten Biegung 94 die zweite rechteckige Öffnung 99 angeordnet ist.

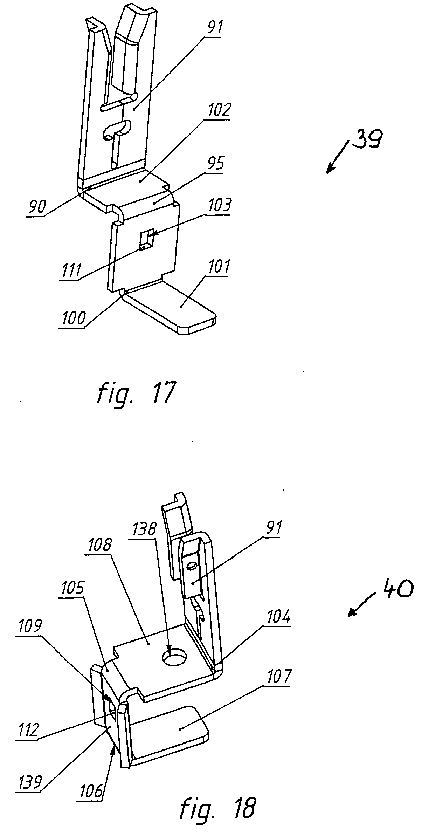

Die zweite Anschlussschiene 39 (vergl. Fig. 17) ist aus einem Stück Flachleiste gefertigt. Am ersten Ende der zweiten Anschlussschiene 39 ist ein Kontaktelement 91 ausgebildet, wonach eine vierte Biegung 90 in einem Winkel von 90°, eine fünfte Biegung 95 in einem Winkel von 90° (in einer Richtung, die der Richtung der vierten Biegung 90 entgegengesetzt ist) und eine sechste Biegung 100 in einem Winkel von 90° (in einer Richtung, die mit der Richtung der vierten Biegung 90 übereinstimmt) angeordnet ist, wodurch sich ein zweites Klemmteil 101 bildet. Die zweite Anschlussschiene 39, die sich zwischen der vierten Biegung 90 und der fünften Biegung 95 befindet, enthält ein zweites Befestigungsteil 102, wobei zwischen der fünften Biegung 95 und der sechsten Biegung 100 eine dritte rechteckige Öffnung 103 angeordnet ist.

Die dritte Anschlussschiene 40 (vergl. Fig. 18) ist aus einem Stück Flachleiste gefertigt. Am ersten Ende der dritten Anschlussschiene 40 ist ein Kontaktelement 91 ausgebildet, wonach eine siebte Biegung 104 in einem Winkel von 90°, eine achte Biegung 105 in einem Winkel von 90° (in einer Richtung, die der Richtung der siebten Biegung 104 entgegengesetzt ist) und eine neunte Biegung 106 in einem Winkel von 90° (in einer Richtung, die der Richtung der siebten Biegung 104 entgegengesetzt ist) angeordnet ist, wodurch sich ein drittes Klemmteil 107 bildet. Die dritte, zwischen der siebten Biegung 104 und der achten Biegung 105 angeordnete Anschlussschiene 40 beinhaltet ein drittes Befestigungsteil 108. Im dritten Befestigungsteil 108 befindet sich eine sechste Öffnung 138, die zusammen mit der fünften, im Zentriersitz 65 der Kappe 54 angeordneten Öffnung 70 das Drehen mit einem Inbusschlüssel erlaubt und das erste Ende 66 der Andrückschrauben 57 zugänglich macht, was das Zu- und Abdrehen der Andrückschraube 57 ermöglicht. Zwischen der achten Biegung 105 und der neunten Biegung 106 befindet sichein Führungsteil, das eine vierte rechteckige Öffnung 109 aufweist. Das dritte Befestigungsteil 108, das Führungssteil 139 und das dritte Klemmteil 107 sind so angeordnet, dass sie die Form des Buchstabens "C" bilden.

Die erste Anschlussschiene 38 ist in die zweiten Führungen 77 eingeschoben und durch die zweiten Schnappverschlüsse 76 und die zweiten Daumen 79 fixiert. Die zweiten Schnappverschlüsse 76 stützen sich am ersten Befestigungsteil 98 der ersten Anschlussschiene 38 ab, wobei sich ein zweiter Daumen 79 an einer dritten Stützfläche 110 abstützt, die in einer zweiten rechteckigen Öffnung 99 der ersten Anschlussschiene 38 angeordnet ist. Eine solche Befestigung der ersten Anschlussschiene 38 bewirkt, dass das erste Klemmteil 97 in einer ersten Anschlusskammer 113 platziert wird, die sich am kompletten Unterteil 1 von unten befindet.

Die zweite Anschlussschiene 39 ist in die dritten Führungen 82 eingeschoben und durch die dritten Schnappverschlüsse 81 und die dritten Daumen 84 fixiert. Die dritten Schnappverschlüsse 81 stützen sich am zweiten Befestigungsteil 102 der zweiten Anschlussschiene 39 ab, wobei sich der dritte Daumen 84 an einer vierten Stützfläche 111 abstützt, die in der dritten rechteckige Öffnung 103 der zweiten Anschlussschiene 39 angeordnet ist. Eine solche Befestigung der zweiten Anschlussschiene 39 bewirkt, dass das zweite Klemmteil 101 in einer zweiten Anschlusskammer 114 platziert wird, die sich am kompletten Unterteil 1 von unten befindet.

Die dritte Anschlussschiene 40 ist in die vierten Führungen 87 eingeschoben und durch die vierten Schnappverschlüsse 86 und die vierten Daumen 89 fixiert. Die vierten Schnappverschlüsse 86 stützten sich am dritten Befestigungsteil 108 der dritten Anschlussschiene 40 ab, wobei der vierte Daumen 89 sich an einer fünften Stützfläche 112 abstützt, die in der vierten rechteckigen Öffnung 109 der dritten Anschlussschiene 40 angeordnet ist. Eine solche Befestigung der dritten Anschlussschiene 40 bewirkt, dass das dritte Klemmteil 107 in einer dritten Anschlusskammer 115 platziert wird, die sich am kompletten Unterteil 1 von unten befindet.

Spezielle Ausbildung und Anordnung der ersten Anschlussschiene 38, der zweiten Anschlussschiene 39 und der dritten Anschlussschiene 40 im Basisteils 34 hat zur Folge, dass die Enden des ersten Klemmteil 97, des zweiten Klemmteil als 101 und des dritten Klemmteil 107 in Richtung des Anschlussteil 74 des Basisteils 34 zeigen.

Um einen kompletten Trennschalter für eine Montage an einer Schienenbrücke mit nach unten gerichteten Stromabflüssen zu erhalten, sollte der Schienenmodul 48 im kompletten Unterteil 1 so platziert werden, um zu erreichen, dass die am zweiten Oberteil 119 des Schienenmoduls 48 angeordnete Kappe 54 sich in der ersten Anschlusskammer 113 des kompletten Unterteils 1 befindet, eine weitere, am zweiten Mittelteil 120 des Schienenmoduls 48 angeordnete Kappe 54 sich in der zweiten Anschlusskammer 114 des kompletten Unterteils 1 befindet und eine letzte, am zweiten Unterteil 121 des Schienenmoduls 48 angeordnete Kappe 54 sich in der dritten Anschlusskammer 115 des kompletten Unterteils 1 befindet, wobei die Stirnwände 116 der Abschirmung der Schienenklemmen 53 in Richtung Anschlussteil 74 des Basisteils 34 zeigen sollten, während dritte Gleitflächen 122 des Schienenmoduls 48 sich auf sechsten Stützflächen 123 des kompletten Unterteils 1 aufsetzen.

Während des Verschiebens des Schienenmoduls 48 in Richtung des Oberteils 71 des Basisteils 34 verlagern sich vierte Gleitflächen 124 des Schienenmoduls 48 an vierten, am Anschlussteil 74 des Basisteils 34 angeordneten Stiften 125, wodurch es zum Biegen von ersten elastischen Armen 126 kommt. Das Verschieben des Schienenmoduls 48 in Richtung des Oberteils 71 des Basisteils 34 hat auch zur Folge, dass eine am zweiten Oberteil 119 des Schienenmoduls 48 angeordnete Andrückfläche 127 der Klemmunterlage 51 das erste Klemmteil 97 der ersten Anschlussschiene 38 überlappt, dass die am zweiten Mittelteil 120 des Schienenmoduls 48 angeordnete Andrückfläche 127 das zweite Klemmteil 101 der zweiten Anschlussschiene 39 überlappt und dass die am zweiten Unterteil 121 des Schienenmoduls 48 angeordnete Andrückfläche 127 das dritte Klemmteil 107 der dritten Anschlussschiene 40 überlappt.

Zusätzlich gelangt während des Verschiebens des Schienenmoduls 48 in Richtung des Oberteils 71 des Basisteils 34 eine erste, sich an zweiten elastischen Armen 128 des Schienenmoduls 48 befindende Vertiefung 117 unter das Maskierelement 47, wodurch eine Informationsaufschrift, z.B. "PUSH", verdeckt wird. Nach einer maximalen Verschiebung des Schienenmoduls 48 kommt es zum Herunterspringen der vierten Gleitflächen 124 des Schienenmoduls 48 von den vierten Stiften 125 und zum Anhaken von fünften Stützflächen 129 an die vierten Stifte 125, wodurch der Schienenmodul 48 an dem kompletten Unterteil 1 fixiert wird. Bei einer solchen Position des Schienenmoduls 48 am kompletten Unterteil 1 kommt es zur vollständigen Aufschiebung der am zweiten Oberteil 119 der Schienenklemmen-Abschirmung 49 angeordneten Andrückfläche 127 auf das erste Klemmteil 97 der ersten Anschlussschiene 38, zur vollständigen Aufschiebung der am zweiten Mittelteil 120 des Schienenmoduls 48 angeordneten Andrückfläche 127 auf das zweite Klemmteil 101 der zweiten Anschlussschiene 39 sowie zur vollständigen Aufschiebung der am zweiten Unterteil 121 des Schienenmoduls 48 angeordneten Andrückfläche 127 auf das dritte Klemmteil 107 der dritten Anschlussschiene 40. Außerdem bewirkt das Hineinschieben von fünften Daumen 132 des Blockier-Maskierelements 42 in dieser Position durch zweite, im Schienenmodul 49 befindlichen Ausschnitte 130 in vierte, am ersten Oberteil 71 des Basisteils 34 angeordnete Führungen 131, dass im Falle einer Montage des besagten Trennschalters an einer Schienenbrücke die Schienenbrücke von oben, auf der ganzen Breite des kompletten Unterteils 1 des Leistensicherungstrennschalters abgedeckt ist. Darüber hinaus erfüllt das Blockier-Maskierelement 42 noch eine weitere Funktion, indem es der Schienenmodul 48 vor dem Herausschieben aus dem kompletten Unterteil 1 zusätzlich sichert.

Das Hineinschieben der fünften Daumen 132 eines weiteren Blockier-Maskierelements 42 durch dritte, im Schienenmodul 48 befindlichen Ausschnitte 133 in fünfte, am ersten Unterteil 73 des Basisteils 34 angeordnete Führungen 134 bewirkt im Falle einer Montage des besagten Trennschalters an einer Schienenbrücke, dass die Schienenbrücke von unten auf der ganzen Breite des kompletten Unterteils 1 des Leistensicherungstrennschalters abgedeckt ist.

Darüber hinaus erfüllt das am ersten Unterteil 73 des Basisteils 34 montierte Blockier-Maskierelement 42 noch eine weitere Funktion, indem es der Schienenmodul 48 vor dem Herausschieben aus dem kompletten Unterteil 1 zusätzlich absichert und eine zweite Vertiefung 118 samt einer Informationsaufschrift, z.B. "PUSH", verdeckt.

Das Befestigen des Trennschalters an einer Schienenbrücke ist nach dem Herausnehmen des kompletten Deckels 3 aus dem Gehäuse 2 möglich. Dann erreicht man nämlich einen Zugang zu den Andrückschrauben 57 und bekommt die Möglichkeit, den Trennschalter an den Sammelschienen durch das Anziehen der Schrauben zu befestigen.

Um die Richtung des Stromabflusses zu ändern, so dass der Abfluss nicht mehr nach unten, sondern nach oben gerichtet ist, sollte zunächst das Blockier-Maskierelement 42 aus dem ersten Oberteil 71 des Basisteils 34 herausgeschoben werden und dann das Blockier-Maskierelement 42 aus dem ersten Unterteil 73 des Basisteils 34 herausgeschoben werden, wodurch eine Informationsaufschrift, z.B. "PUSH", die sich in der zweiten Vertiefung 118 des Schienenmoduls 48 befindet, geöffnet wird. Nach dem Andrücken der zweiten Vertiefung 118 des Schienenmoduls 48 und Biegen der ersten elastischen Arme 126 verlagert sich die fünfte Stützfläche 129 hinter die vierten Stifte 125, wodurch das Verschieben des Schienenmoduls 48 möglich wird. In Folge dessen verschieben sich die fünften Gleitflächen 135, die an den ersten elastischen Armen 126 angeordnet sind, was wiederum dazu führt, dass die am zweiten Oberteil 119 des Schienenmoduls 48 angeordnete Andrückfläche 127 vom ersten Klemmteil 97 der ersten Anschlussschiene 38 abrutscht, die am zweiten Mittelteil 120 des Schienenmoduls 48 angeordnete Andrückfläche 127 vom zweiten Klemmteil 101 der zweiten Anschlussschiene 39 abrutscht und die am zweiten Unterteil 121 des Schienenmoduls 48 angeordnete Andrückfläche 127 vom dritten Klemmteil 107 der dritten Anschlussschiene 40 abrutscht. Beim vollständigem Verschieben des Schienenmoduls 49 kommt es zum Herunterspringen der fünften Gleitflächen 135 von den vierten Stiften 125. In dieser Position ist es möglich, der Schienenmodul 49 aus dem kompletten Unterteil 1 ganz herauszunehmen.

Um einen kompletten Trennschalter für eine Montage an einer Schienenbrücke mit nach oben gerichteten Stromabflüssen zu erhalten, sollte der Schienenmodul 49 um einen Winkel von 180 Grad gegenüber der Quer-Symmetrieachse des Schienenmoduls 49 gedreht werden, wonach der Schienenmodul 48 im kompletten Unterteil 1 so platziert werden sollte, um zu erreichen, dass die am zweiten Oberteil 119 des Schienenmoduls 48 angeordnete Kappe 54 sich in der dritten Anschlusskammer 115 des kompletten Unterteils 1 befindet, eine weitere, am zweiten Mittelteil 120 des Schienenmoduls 48 angeordnete Kappe 54 sich in der zweiten Anschlusskammer 114 des kompletten Unterteils 1 befindet und eine letzte, am zweiten Unterteil 121 des Schienenmoduls 48 angeordnete Kappe 54 sich in der ersten Anschlusskammer 113 des kompletten Unterteils 1 befindet, wobei die Stirnwände 116 der Abschirmung der Schienenklemmen 53 in Richtung des ersten Oberteils 71 des Basisteils 34 zeigen sollten, während die dritten Gleitflächen 122 des Schienenmoduls 48 sich auf den sechsten Stützflächen 123 des kompletten Unterteils 1 aufsetzen. Während des Verschiebens des Schienenmoduls 48 in Richtung des Oberteils 71 des Basisteils 34 verlagern sich sechste Gleitflächen 137 des Schienenmoduls 48 an vierten, am Anschlussteil 74 des Basisteils 34 angeordneten Stiften 125, wodurch es zum Biegen der zweiten elastischen Arme 128 kommt. Das Verschieben des Schienenmoduls 48 in Richtung des Oberteils 71 des Basisteils 34 hat auch zur Folge, dass die am zweiten Unterteil 121 der Abschirmung der Schienenklemmen 49 angeordnete Andrückfläche 127 das erste Klemmteil 97 der ersten Anschlussschiene 38 überlappt, dass die am zweiten Mittelteil 120 des Schienenmoduls 48 angeordnete Andrückfläche 127 das zweite Klemmteil 101 der zweiten Anschlussschiene 39 überlappt und dass die am zweiten Oberteil 119 des Schienenmoduls 48 angeordnete Andrückfläche 127 das dritte Klemmteil 107 der dritten Anschlussschiene 40 überlappt. Zusätzlich gelangt während des Verschiebens des Schienenmoduls 48 in Richtung des Oberteils 71 des Basisteils 34 die zweite, sich an den ersten elastischen Armen 126 des Schienenmoduls 48 befindende Vertiefung 118 unter das Maskierelement 47, wodurch eine Informationsaufschrift, z.B. "PUSH", verdeckt wird. Nach einer maximalen Verschiebung des Schienenmoduls 48 kommt es zum Herunterspringen der sechsten Gleitflächen 137 des Schienenmoduls 48 von den vierten Stiften 125 und zum Anhaken von sechsten Stützflächen 136 an die vierten Stifte 125, wodurch der Schienenmodul 48 an dem kompletten Unterteil 1 fixiert wird. Bei einer solchen Position des Schienenmoduls 48 am kompletten Unterteil 1 kommt es zur vollständigen Aufschiebung der am zweiten Unterteil 121 des Schienenmoduls 48 angeordneten Andrückfläche 127 auf das erste Klemmteil 97 der ersten Anschlussschiene 38, zur Überlappung der am zweiten Mittelteil 120 des Schienenmoduls 48 angeordneten Andrückfläche 127 auf das zweite Klemmteil 101 der zweiten Anschlussschiene 39 und zur Überlappung der am zweiten Oberteil 119 der Abschirmung der Schienenklemmen 49 angeordneten Andrückfläche 127 auf das dritte Klemmteil 107 der dritten Anschlussschiene 40. Außerdem bewirkt das Hineinschieben der fünften Daumen 132 des Blockier-Maskierelements 42 in dieser Position durch die dritten, im Schienenmodul 49 befindlichen Ausschnitte 133 in die vierten, am ersten Oberteil 71 des Basisteils 34 angeordneten Führungen 131, dass im Falle einer Montage des besagten Trennschalters an einer Schienenbrücke die Schienenbrücke von oben auf der ganzen Breite des kompletten Unterteils 1 des Leistensicherungstrennschalters abgedeckt ist.

Darüber hinaus erfüllt das Blockier-Maskierelement 42 noch eine weitere Funktion, indem es der Schienenmodul 48 vor dem Herausschieben aus dem kompletten Unterteil 1 zusätzlich absichert.

Das Hineinschieben der fünften Daumen 132 eines weiteren Blockier-Maskierelements 42 durch die zweiten, im Schienenmodul 49 befindlichen Ausschnitte 130 in die fünften, am ersten Unterteil 73 des Basisteils 34 angeordneten Führungen 134 bewirkt im Falle einer Montage des besagten Trennschalters an einer Schienenbrücke, dass die Schienenbrücke von unten auf der ganzen Breite des kompletten Unterteils 1 des Leistensicherungstrennschalters abgedeckt ist.

Darüber hinaus erfüllt das am ersten Unterteil 73 des Basisteils 34 montierte Blockier-Maskierelement 42 noch eine weitere Funktion, indem es der Schienenmodul 48 vor dem Herausschieben aus dem kompletten Unterteil 1 zusätzlich absichert und die erste Vertiefung 117 samt einer Informationsaufschrift, z.B. "PUSH", verdeckt.

Das Befestigen des Trennschalters an einer Schienenbrücke ist nach dem Herausnehmen des kompletten Deckels 3 aus dem Gehäuse 2 möglich. Dann erreicht man nämlich einen Zugang zu den Andrückschrauben 57 und bekommt die Möglichkeit, den Trennschalter an den Sammelschienen durch das Anziehen der Schrauben zu befestigen.

Um die Richtung des Stromabflusses zu ändern, so dass der Abfluss nicht mehr nach unten, sondern nach oben gerichtet ist, sollte zunächst das Blockier-Maskierelement 42 aus dem ersten Oberteil 71 des Basisteils 34 herausgeschoben werden und dann das Blockier-Maskierelement 42 aus dem ersten Unterteil 73 des Basisteils 34 herausgeschoben werden, wodurch eine Informationsaufschrift, z.B. "PUSH", die sich in der zweiten Vertiefung 118 des Schienenmoduls 48 befindet, geöffnet wird. Nach dem Andrücken der zweiten Vertiefung 118 des Schienenmoduls 48 und Biegen der ersten elastischen Arme 126 verlagert sich die fünfte Stützfläche 129 hinter die vierten Stifte 125, wodurch das Verschieben des Schienenmoduls 48 möglich wird. In Folge dessen verschieben sich die fünften Gleitflächen 135, die an den ersten elastischen Armen 126 angeordnet sind, was wiederum dazu führt, dass die am zweiten Oberteil 119 des Schienenmoduls 48 angeordnete Andrückfläche 127 vom ersten Klemmteil 97 der ersten Anschlussschiene 38 abrutscht, die am zweiten Mittelteil 120 des Schienenmoduls 48 angeordnete Andrückfläche 127 vom zweiten Klemmteil 101 der zweiten Anschlussschiene 39 abrutscht und die am zweiten Unterteil 121 des Schienenmoduls 48 angeordnete Andrückfläche 127 vom dritten Klemmteil 107 der dritten Anschlussschiene 40 abrutscht. Beim vollständigem Verschieben des Schienenmoduls 49 kommt es zum Herunterspringen der fünften Gleitflächen 135 von den vierten Stiften 125. In dieser Position ist es möglich, der Schienenmodul 49 aus dem kompletten Unterteil 1 ganz herauszunehmen.

Um einen kompletten Trennschalter für eine Montage an einer Schienenbrücke mit nach oben gerichteten Stromabflüssen zu erhalten, sollte der Schienenmodul 49 um einen Winkel von 180 Grad gegenüber der Quer-Symmetrieachse des Schienenmoduls 49 gedreht werden, wonach der Schienenmodul 48 im kompletten Unterteil 1 so platziert werden sollte, um zu erreichen, dass die am zweiten Oberteil 119 des Schienenmoduls 48 angeordnete Kappe 54 sich in der dritten Anschlusskammer 115 des kompletten Unterteils 1 befindet, eine weitere, am zweiten Mittelteil 120 des Schienenmoduls 48 angeordnete Kappe 54 sich in der zweiten Anschlusskammer 114 des kompletten Unterteils 1 befindet und eine letzte, am zweiten Unterteil 121 des Schienenmoduls 48 angeordnete Kappe 54 sich in der ersten Anschlusskammer 113 des kompletten Unterteils 1 befindet, wobei die Stirnwände 116 der Abschirmung der Schienenklemmen 53 in Richtung des ersten Oberteils 71 des Basisteils 34 zeigen sollten, während die dritten Gleitflächen 122 des Schienenmoduls 48 sich auf den sechsten Stützflächen 123 des kompletten Unterteils 1 aufsetzen. Während des Verschiebens des Schienenmoduls 48 in Richtung des Oberteils 71 des Basisteils 34 verlagern sich sechste Gleitflächen 137 des Schienenmoduls 48 an vierten, am Anschlussteil 74 des Basisteils 34 angeordneten Stiften 125, wodurch es zum Biegen der zweiten elastischen Arme 128 kommt. Das Verschieben des Schienenmoduls 48 in Richtung des Oberteils 71 des Basisteils 34 hat auch zur Folge, dass die am zweiten Unterteil 121 der Abschirmung der Schienenklemmen 49 angeordnete Andrückfläche 127 das erste Klemmteil 97 der ersten Anschlussschiene 38 überlappt, dass die am zweiten Mittelteil 120 des Schienenmoduls 48 angeordnete Andrückfläche 127 das zweite Klemmteil 101 der zweiten Anschlussschiene 39 überlappt und dass die am zweiten Oberteil 119 des Schienenmoduls 48 angeordnete Andrückfläche 127 das dritte Klemmteil 107 der dritten Anschlussschiene 40 überlappt. Zusätzlich gelangt während des Verschiebens des Schienenmoduls 48 in Richtung des Oberteils 71 des Basisteils 34 die zweite, sich an den ersten elastischen Armen 126 des Schienenmoduls 48 befindende Vertiefung 118 unter das Maskierelement 47, wodurch eine Informationsaufschrift, z.B. "PUSH", verdeckt wird. Nach einer maximalen Verschiebung des Schienenmoduls 48 kommt es zum Herunterspringen der sechsten Gleitflächen 137 des Schienenmoduls 48 von den vierten Stiften 125 und zum Anhaken von sechsten Stützflächen 136 an die vierten Stifte 125, wodurch der Schienenmodul 48 an dem kompletten Unterteil 1 fixiert wird. Bei einer solchen Position des Schienenmoduls 48 am kompletten Unterteil 1 kommt es zur vollständigen Aufschiebung der am zweiten Unterteil 121 des Schienenmoduls 48 angeordneten Andrückfläche 127 auf das erste Klemmteil 97 der ersten Anschlussschiene 38, zur Überlappung der am zweiten Mittelteil 120 des Schienenmoduls 48 angeordneten Andrückfläche 127 auf das zweite Klemmteil 101 der zweiten Anschlussschiene 39 und zur Überlappung der am zweiten Oberteil 119 der Abschirmung der Schienenklemmen 49 angeordneten Andrückfläche 127 auf das dritte Klemmteil 107 der dritten Anschlussschiene 40. Außerdem bewirkt das Hineinschieben der fünften Daumen 132 des Blockier-Maskierelements 42 in dieser Position durch die dritten, im Schienenmodul 49 befindlichen Ausschnitte 133 in die vierten, am ersten Oberteil 71 des Basisteils 34 angeordneten Führungen 131, dass im Falle einer Montage des besagten Trennschalters an einer Schienenbrücke die Schienenbrücke von oben auf der ganzen Breite des kompletten Unterteils 1 des LeistenSicherungstrennschalters abgedeckt ist.

Darüber hinaus erfüllt das Blockier-Maskierelement 42 noch eine weitere Funktion, indem es der Schienenmodul 48 vor dem Herausschieben aus dem kompletten Unterteil 1 zusätzlich absichert.

Das Hineinschieben der fünften Daumen 132 eines weiteren Blockier-Maskierelements 42 durch die zweiten, im Schienenmodul 49 befindlichen Ausschnitte 130 in die fünften, am ersten Unterteil 73 des Basisteils 34 angeordneten Führungen 134 bewirkt im Falle einer Montage des besagten Trennschalters an einer Schienenbrücke, dass die Schienenbrücke von unten auf der ganzen Breite des kompletten Unterteils 1 des LeistenSicherungstrennschalters abgedeckt ist. Darüber hinaus erfüllt das am ersten Unterteil 73 des Basisteils 34 montierte Blockier-Maskierelement 42 noch eine weitere Funktion, indem es der Schienenmodul 48 vor dem Herausschieben aus dem kompletten Unterteil 1 zusätzlich absichert und die erste Vertiefung 117 samt einer Informationsaufschrift, z.B. "PUSH", verdeckt.

**Bezugszeichenliste:**

| Nummer | deutsch | in welcher Figur? |
|---|---|---|
| 1 | Unterteil | 1 |
| 2 | Gehäuse | 1 |
| 3 | Deckel | 1 |
| 4 | Kopfteil | 3 |
| 5 | Handgriff | 3 |
| 6 | Auslöseelement | 3 |
| 7 | Scheibe | 3 |
| 8 | Seitenteil | 6 |
| 9 | Stift | 6 |
| 10 | Kragen | 6 |
| 11 | Öffnung | 6 |
| 12 | | 12 |
| 13 | zweite Seitenteile | 12 |
| 14 | zweite Stifte | 12 |
| 15 | Kragen | 12 |
| 16 | Positionierungselement | 6 |
| 17 | Öffnung | 12 |
| 18 | Steckleiste | 6 |
| 19 | Steckleiste | 7 |
| 20 | Führung | 9 |
| 21 | Öffnung | 6 |
| 22 | Positionierungselement | 12 |
| 23 | Seitenteil | 4 |
| 24 | Trennwand | 7 |
| 25 | dritter Stift | 8 |
| 26 | fünfter Anschlag | 4, 5 |
| 27 | dritte Öffnung | 4 |
| 28 | Stirnteil | 6 |
| 29 | Öffnung | 6 |
| 30 | Griffteil | 4 |
| 31 | sechster Anschlag | 10 |
| 32 | siebter Ana | 2, 11 |
| 33 | Stützflächen | 2 |
| 34 | Basisteil | 23 |
| 35 | | 11 |
| 36 | vierter Stift | 10 |
| 37 | Abflussschiene | 12 |
| 38 | erste Anschlussschiene | 23 |
| 39 | zweite Anschlussschiene | 23 |
| 40 | dritte Anschlussschiene | 23 |
| 41 | | |
| 42 | Blockier-Maskierelemente | 23 |
| 43 | Gleitfläche | 4 |
| 44 | Leitfläche | 10 |
| 45 | | 5 |
| 46 | | 10 |
| 47 | Maskierelement | 26, 27 |
| 48 | Schienenmodul | 23 |
| 49 | Abschirmung der Schienenklemme | 13, 20, 21 |
| 50 | Aussparung | 13 |
| 51 | Klemmunterlage | 20, 21, 23 |
| 52 | Sicherungssitz | 13 |
| 53 | Schienenklemme | 20 |
| 54 | Klappe | 20 |
| 55 | Stirnfläche | 22 |
| 56 | vierte Öffnung | 22 |
| 57 | Andrücksschraube | 23 |
| 58 | erste Seitenfläche | 13 |
| 59 | erster Daumen | 13 |
| 60 | Positionierungsstift | 13 |
| 61 | zweite Seitenfläche | 28, 29 |
| 62 | erster Schnappverschluss | 28, 29 |
| 63 | Positionierungssitz | 28, 29 |
| 64 | Innenfläche | 28 |
| 65 | Zentriersitz | 28 |
| 66 | erstes Ende | 23 |
| 67 | Andrücksschraube | 23 |
| 68 | zweiter Positionierungssitz | 14 |
| 69 | zweite Stützfläche | 14 |
| 70 | fünfte Öffnung | 29 |
| 71 | Oberteil | 25 |
| 72 | Mittelteil | 25 |
| 73 | Unterteil | 25 |
| 74 | Anschlussteil | 25 |
| 75 | Befestigungssitz | 25 |
| 76 | zweiter Schnappverschluss | 25 |
| 77 | zweite Führung | 25 |
| 78 | erste Sicherungsfläche | 25 |
| 79 | zweiter Daumen | 25 |
| 80 | zweiter Befestigungssitz | 25 |
| 81 | dritter Schnappverschluss | 24, 25 |
| 82 | dritte Führung | 25 |
| 83 | zweite Sicherungsfläche | 25 |
| 84 | dritter Daumen | 25 |
| 85 | dritter Befestigungssitz | 24 |
| 86 | vierter Schnappverschluss | 24 |
| 87 | vierte Führung | 24 |
| 88 | dritte Sicherungsfläche | 24 |
| 89 | vierter Daumen | 24 |
| 90 | vierte Biegung | 17 |
| 91 | Kontaktelement | 16, 17, 18 |
| 92 | erste Biegung | 16 |
| 93 | zweite Biegung | 16 |
| 94 | dritte Biegung | 16 |
| 95 | fünfte Biegung | 17 |
| 96 | Rezess | 16 |
| 97 | erstes Klemmteil | 16 |
| 98 | erstes Befestigungsteil | 16 |
| 99 | zweite rechteckige Öffnung | 16 |
| 100 | sechste Biegung | 17 |
| 101 | zweites Klemmteil | 17 |
| 102 | zweites Befestigungsteil | 17 |
| 103 | dritte rechteckige Öffnung | 17 |
| 104 | siebte Biegung | 18 |
| 105 | achte Biegung | 18 |
| 106 | neunte Biegung | 18 |
| 107 | drittes Klemmteil | 18 |
| 108 | drittes Befestigungsteil | 18 |
| 109 | vierte rechteckige Öffnung | 18 |
| 110 | dritte Stützfläche | 16 |
| 111 | vierte Stützfläche | 17 |
| 112 | fünfte Stützfläche | 18 |
| 113 | erste Anschlusskammer | 26, 27 |
| 114 | zweite Anschlusskammer | 26, 27 |
| 115 | dritte Anschlusskammer | 26, 27 |
| 116 | Stirnwand | 13 |
| 117 | erste Vertiefung | 21 |
| 118 | zweite Vertiefung | 21 |
| 119 | zweites Oberteil | 20 |
| 120 | zweites Mittelteil | 20 |
| 121 | zweites Unterteil | 20 |
| 122 | dritte Gleitfläche | 20 |
| 123 | sechste Stützfläche | 25 |
| 124 | vierte Gleitfläche | 20 |
| 125 | vierte Stifte | 24, 25 |
| 126 | erster elastischer Arm | 20, 21 |
| 127 | Andruckfläche | 15, 21 |
| 128 | zweiter elastischer Arm | 20, 21 |
| 129 | fünfte Stützfläche | 20 |
| 130 | zweiter Ausschnitt | 20, 21 |
| 131 | vierte Führung | 23, 24 |
| 132 | fünfter Daumen | 19 |
| 133 | dritter Ausschnitt | 20, 21 |
| 134 | fünfte Führung | 23, 24, 25 |
| 135 | fünfte Gleitfläche | 21 |
| 136 | sechste Stützfläche | 20 |
| 137 | sechste Gleitfläche | 20 |

## Patentansprüche

1. Sicherungstrennschalter, umfassend:
ein Basisteil (34), in das wenigstens drei Anschlussschienen (38, 39, 40) eingebaut sind,
wobei die Anschlussschienen (38, 39, 40) jeweils ein Kontaktelement (91) und ein Klemmteil (97; 101; 107) aufweisen,
wobei die Klemmteile (97; 101; 107) mit ihren freien Enden jeweils in Richtung eines Anschlussteils (74) des Basisteils (34) zeigen,
**dadurch gekennzeichnet, dass**
- die Anschlussschiene (40) ein eine Öffnung (138) aufweisendes Befestigungsteil (108) hat,
- die Öffnung (138) zusammen mit einer in einer Kappe (54) befindlichen Öffnung (70) das Drehen mit einem Inbusschlüssel erlaubt und ein Ende (66) einer Andrückschraube (57) zugänglich macht,
wobei die Kappe (54) in eine im Basisteil (34) befindliche Anschlusskammer (113, 114, 115) platzierbar ist.

2. Sicherungstrennschalter nach Anspruch 1, **dadurch gekennzeichnet, dass**
- die Kappe (54) Schnappverschlüsse (62) mit ersten und zweiten Positionierungssitzen (63); (68) aufweist,
- in die ersten Positionierungssitze (63) jeweils ein Positionierungsstift (60) einschiebbar ist, welcher die Lage der Kappe (54) gegenüber einer Abschirmung (49) der Schienenklemmen sichert,
- die ersten Enden (66) der Andrückschrauben (57) jeweils in einen Zentriersitz (65) platzierbar sind,
- und in die zweiten Positionierungssitze (68) die Andrückschrauben (67) mit ihren anderen Enden gelangen und sich jeweils an einer Stützfläche (69) der zweiten Positionierungssitze (68) abstützen,
so dass im montierten Zustand jede Andrückschraube (67) blockiert und lediglich um ihre eigene Drehachse drehbar ist.

3. Sicherungstrennschalter nach Anspruch 1 oder 2, **dadurch gekennzeichnet, dass** es sich bei dem Sicherungstrennschalter um einen Leistensicherungstrennschalter handelt.

## Claims

1. Circuit breaker comprising:
a base part (34) into which at least three connecting strips (38, 39, 40) are installed,
wherein the connecting strips (38, 39, 40) each comprise a contact element (91) and a clamping part (97; 101; 107),
wherein the clamping parts (97; 101; 107) each point with their free ends in the direction of a connecting part (74) of the base part (34),
**characterised in that**
- the connecting strip (40) has an attachment part (108) comprising an opening (138),
- the opening (138) together with an opening (70) located in a cap (54) permits rotation with a hex key and renders an end (66) of a pressing screw (57) accessible,
wherein the cap (54) can be placed in a connecting chamber (113, 114, 115) located in the base part (34).

2. Circuit breaker as claimed in claim 1, **characterised in that**
- the cap (54) comprises snap-fit latches (62) with first and second positioning seats (63); (68),
- a respective positioning pin (60) can be pushed into the first positioning seats (63) and secures the position of the cap (54) with respect to a screen (49) of the strip clamps,
- the first ends (66) of the pressing screws (57) can each be placed into a centring seat (65),
- and the pressing screws (67) pass with their other ends into the second positioning seats (68) and are each supported on a support surface (69) of the second positioning seats (68),
so that in the mounted state, each pressing screw (67) is blocked and can be rotated only about its own axis of rotation

3. Circuit breaker as claimed in claim 1 or 2, **characterised in that** the circuit breaker is a block circuit breaker.

## Revendications

1. Disjoncteur de sécurité comprenant une base (34) dans laquelle sont incorporées au moins trois coulisses de connexion (38, 39, 40) dotées, chacune, d'un contacteur (91) et d'une languette de serrage (97 ; 101 ; 107), l'extrémité libre de cette dernière étant orientée vers un élément de connexion (74) de la base (34), **caractérisé en ce que** la coulisse de connexion (40) inclut une pièce de fixation (108) dans laquelle est ménagé un orifice (138) et **en ce que** ledit orifice (138), conjointement avec une ouverture (70) pratiquée dans un capot (54), donne accès à un tournevis et à l'extrémité (66) d'une vis de pression (57), tandis que le capot (54) peut être inséré dans un logement de connexion (113, 114, 115) agencé dans la base (34).

2. Disjoncteur de sécurité selon la revendication 1, caractérisé, premièrement en ce que le capot (54) est doté d'un système de fermeture par encliquetage (62) incluant des premières (63) et des secondes (68) encoches de positionnement, deuxièmement en ce que l'on peut insérer dans chacune des premières encoches (63) un ergot de positionnement (60) qui assure la position du capot (54) par rapport à un cache (49) des languettes de la coulisse, troisièmement en ce que la première extrémité (66) de chaque vis de pression (57) peut être insérée dans un logement de centrage (65), et, quatrièmement en ce que les vis de pression (67), par leur autre extrémité, peuvent atteindre les secondes encoches de positionnement (68) et s'appliquer, chacune, contre une surface d'appui (69) de ces dernières, de sorte qu'à l'état monté, chacune des vis de pression (69) est bloquée et peut tourner seulement autour de son propre axe de rotation.

3. Disjoncteur de sécurité selon la revendication 1 ou 2, **caractérisé en ce qu'**il s'agit d'un bloc disjoncteur.
